# EUROPÄISCHE PATENTSCHRIFT

(11) **EP 2 660 082 B1**
(45) Veröffentlichungstag und Bekanntmachung des Hinweises auf die Patenterteilung: **10.08.2016**
(21) Anmeldenummer: 13001541.5
(22) Anmeldetag: 26.03.2013
(51) Int. Cl.: B60D 1/48, B60D 1/28

(54) **Anhängekupplung mit einem Schraub-Befestigungselement**
Trailer coupling with a screw-on fixing element
Attelage doté d'un élément de fixation à visser

(30) Priorität: 04.05.2012 DE 102012008741; 24.10.2012 DE 202012010174 U
(43) Veröffentlichungstag der Anmeldung: 06.11.2013
(73) Patentinhaber: WESTFALIA - Automotive GmbH, 33378 Rheda-Wiedenbrück (DE)
(72) Erfinder: Bachmann, Horst, D-44793 Bochum (DE); Wellnitz, Heinrich, D-33378 Rheda-Wiedenbrück (DE)
(74) Vertreter: Patentanwälte Bregenzer und Reule Partnerschaftsgesellschaft mbB

(56) Entgegenhaltungen:
- US-A- 3 169 784
- US-A- 3 442 534
- US-A- 3 782 762
- US-A1- 2012 091 690

## Beschreibung

Die Erfindung betrifft eine Anhängekupplung für ein Kraftfahrzeug, gemäß dem Oberbegriff des Anspruchs 1.

Eine derartige Anhängekupplung ist in US 2012/00916 9 0 A1 erläutert. Aktuell gibt es Bestrebungen, dass für die Befestigung von Abreißseilen an Anhängekupplungen spezielle Vorrichtungen vorgeschrieben werden, beispielsweise eine geeignete Öse an einem Kupplungsarm, in die das Abreißseil eingehängt werden kann. Dazu muss jedoch der Kupplungsarm entsprechend vorgerüstet werden. Sofern eine Konstruktion bereits abgeschlossen ist, müssen beispielsweise Produktionswerkzeuge geändert werden, damit ein entsprechend modifizierter Kupplungsarm produziert werden kann, der eine Öse für ein Abreißseil aufweist. Das ist sehr aufwändig. Eine Nachrüstung einer bereits vorhandene Anhängekupplung mit einer Öse für ein Abreißseil ist nur unter großen Umständen möglich.

Es ist daher die Aufgabe der vorliegenden Erfindung, eine Anhängekupplung mit einer Öse für ein Abreißseil bereitzustellen.

Zur Lösung der Aufgabe ist eine Anhängekupplung gemäß der technischen Lehre des Anspruchs 1 vorgesehen.

Es ist ein Grundgedanke der Erfindung, dass die an sich vorhandenen Komponenten der Anhängekupplung nicht modifiziert werden müssen, um die Anhängekupplung mit einer Öse für ein Abreißseil auszurüsten, sondern dass gemäß dem innovativen Konzept ein Schraub-Befestigungselement vorgeschlagen wird, das bereits eine Öse für ein Abreißseil aufweist. Somit kann beispielsweise eine bereits fertig konstruierte und in Serie produzierte Anhängekupplung mit einer Öse für ein Abreißseil versehen werden. Sofern komplizierte Gussteile oder Schmiedeteile vorhanden sind, die an sich normalerweise nur mit Schraubbolzen am Kraftfahrzeug oder einem Grundträger befestigt werden, kann anstelle eines Schraubbolzens das innovative Schraub-Befestigungselement mit der Öse für das Abreißseil eingesetzt werden, so dass mit geringem Aufwand ein optimaler Nutzen erzielt ist.

Bevorzugt hat die Halterung eine Durchstecköffnung zum Durchstecken des Schraubabschnitts des mindestens einen Schraub-Befestigungselements. Somit kann das Schraub-Befestigungselement in der Art eines Bolzens durch die Durchstecköffnung der Halterung durchgesteckt und beispielsweise mit an Kraftfahrzeug oder einem an dem Kraftfahrzeug angeordneten Querträger befestigt werden. Der Querträger, der quer zur Fahrtrichtung des Kraftfahrzeugs verläuft, wenn er am Kraftfahrzeug montiert ist, ist vorzugsweise ein Bestandteil der Anhängekupplung. Von dem Querträger stehen beispielsweise in Fahrzeuglängsrichtung verlaufende Seitenschenkel ab, die mit der Karosserie, insbesondere einem Längsträger derselben, verbindbar sind, beispielsweise verschraubbar.

Das Schraub-Befestigungselement, das die Öse oder das Ösen-Element aufweist, kann auch dazu dienen, ein Bauteil, zum Beispiel eine Steckdose, an dem Kupplungsarm zu befestigen.

Der Schraubabschnitt kann beispielsweise an einem Schraubvorsprung angeordnet sein, der fest mit der Öse verbunden ist. Es ist aber auch möglich, dass der Schraubabschnitt des Schraub-Befestigungselements an einem sozusagen als eine Mutter ausgestalteten Teil des Schraub-Befestigungselements angeordnet ist, d.h. dass beispielsweise an der Mutter die Öse angeordnet ist bzw. umgekehrt formuliert an der Öse eine Mutter fest angeordnet ist. An dieser Stelle sei bemerkt, dass selbstverständlich auch mehrere Schraubabschnitte, Innengewinde und/oder Außengewinde, an einem erfindungsgemäßen Schraub-Befestigungselement vorgesehen sein können. Auch eine Kombination von Innengewinde und Außengewinde ist bei einem erfindungsgemäßen Schraub-Befestigungselement ohne weiteres möglich, was z.B. die Belastbarkeit der Verbindung erhöht.

Eine bevorzugte Ausführungsform der Erfindung sieht vor, dass das Schraub-Befestigungselement mehrteilig ist und ein den Schraubabschnitt aufweisendes Schraubelement und ein die Öse zum Anhängen des Anhängerabreißseils aufweisendes Ösenelement aufweist, wobei an dem Ösen-Element eine Durchstecköffnung oder eine Einschrauböffnung zum Durchstecken oder Einschrauben des Schraubabschnitts des Schraubelements vorhanden ist. Das Ösen-Element hat also beispielsweise eine Art Mutter. Die Durchstecköffnung kann auch an einem Zwischen- oder Stützflansch vorgesehen sein, so dass dieser Zwischen- oder Stützflansch in der Art einer Unterlegscheibe zwischen dem Kopf eines Schraubbolzens oder eines sonstigen Befestigungsbolzens und dem Untergrund zu liegen kommen kann.

Bevorzugt hat das Ösen-Element bei dieser Ausführungsform eine an der Einschrauböffnung oder der Durchstecköffnung angeordnete Drehsicherungskontur zum verdrehsicheren Halten des Schraubelements, zum Beispiel eines Kopfes des Schraubelements. Vorzugsweise ist an dem Ösen-Element eine Vertiefung oder Aufnahme für einen Kopf des Schraubelements vorgesehen. Zweckmäßigerweise befindet sich die Drehsicherungskontur an der Aufnahme, beispielsweise deren Innenumfang. Die Drehsicherungskontur umfasst beispielsweise einen Sechskant, z.B. einen Innen-Sechskant oder einen Außen-Sechskant.

Das mindestens eine Schraub-Befestigungselement hat zweckmäßigerweise mindestens eine Drehmitnahmekontur für ein Montagewerkzeug. Bei der Drehmitnahmekontur kann es sich beispielsweise um einen Mehrkant, insbesondere einen Sechskant, handeln. Somit ist es möglich, mit einem Schraubenschlüssel oder einem sonstigen Montagewerkzeug das Schraub-Befestigungselement zu montieren.

Eine Mittelachse des Schraubabschnitts, also seine Drehachse, und eine Mittelachse der mindestens einen Drehmitnahmekontur verlaufen zweckmäßigerweise koaxial. Im Prinzip wäre es aber auch möglich, das die beiden Mittelachsen versetzt zueinander sind, d.h. dass eine gewisse Exzentrität vorhanden ist, und dennoch durch Betätigung der Drehmitnahmekontur der Schraubabschnitt in ein Gegengewinde, zum Beispiel eine Mutter, eine Bohrung mit Gewinde oder dergleichen einschraubbar ist.

Die mindestens eine Drehmitnahmekontur kann an mehreren Stellen angeordnet sein bzw. es können auch mehrere Drehmitnahmekonturen an einem Schraub-Befestigungselement vorgesehen sein. Beispielsweise umfasst die Drehmitnahmekontur eine zwischen dem Schraubabschnitt und der Öse angeordnete Drehmitnahmekontur. Somit kann quasi an einem Fußpunkt, direkt beim Schraubabschnitt, das Montagewerkzeug an das Schraub-Befestigungselement angesetzt werden. Aber auch davon entfernt ist es vorteilhaft, eine Drehmitnahmekontur vorzusehen. Beispielsweise ist an einem freien Ende der Öse, entfernt vom Schraubabschnitt, eine Drehmitnahmekontur vorgesehen. Diese Drehmitnahmekontur ist besonders gut zugänglich.

Die mindestens eine Drehmitnahmekontur ist zweckmäßigerweise an einem Kopfteil, an einem Fußteil oder an einem plattenförmigen Körper angeordnet. Beispielsweise befindet sich die Drehmitnahmekontur an einem Kopfteil, das an einem freien Ende der Öse angeordnet ist. Das Kopfteil und der Schraubabschnitt sind an einander entgegengesetzten Längsendbereichen der Öse eines derartigen Schraub-Befestigungselements angeordnet.

Die Öse hat zweckmäßigerweise eine Längsgestalt, so dass sie sich möglichst weit vom Schraubabschnitt weg erstreckt. Beispielsweise hat die Öse eine bezüglich einer Längserstreckungsrichtung des Schraubabschnitts oder des Schraub-Befestigungselements eine solche Längsgestalt, dass eine Querbreite der Öse quer zu der Längserstreckungsrichtung kleiner als eine sich in der Längserstreckungsrichtung erstreckende Länge der Öse ist. Die Längsgestalt der Öse hat den Vorteil, dass die Öse möglichst weit vom Schraubabschnitt absteht und gut zugänglich ist und/oder dass eine am freien Ende der Öse angeordnete Drehmitnahmekontur für ein Montagewerkzeug besonders gut zugänglich ist. Es versteht sich, dass auch eine sozusagen in Längsrichtung gestauchte oder gequetschte Öse im Rahmen der Erfindung liegt.

Die Öse des mindestens einen Schraub-Befestigungselements hat eine mechanische Verstärkung zur Erhöhung der Belastbarkeit der Öse. Beispielsweise sind Abschnitte der

Öse im Querschnitt entsprechend größer bemessen, damit die Öse einer Zugbeanspruchung durch das Abreißseil standhält. Die mechanische Verstärkung kann auch vorsehen, dass die Öse aus einem besonders zugfesten Stahl besteht, zumindest teilweise. Es ist auch möglich, dass die Öse gehärtet ist. Weiterhin ist es möglich, dass sich die Öse an einem Abschnitt der Anhängekupplung abstützt, beispielsweise am Kupplungsarm.

Das erfindungsgemäße Schraub-Befestigungselement, beispielsweise ein Ösen-Element, das mit einer Schraube oder einem Schraubelement zusammenwirkt, hat zweckmäßigerweise mindestens eine Verstärkung, zum Beispiel eine Verstärkungsrippe. Bevorzugt sind beispielsweise eine oder mehrere Rippen, die sich zwischen einem Flanschabschnitt, der eine Durchtrittsöffnung für eine Schraube oder einen Schraubabschnitt aufweist, und einem Ösenabschnitt des Ösen-Elements.

Ein eine Durchtrittsöffnung der Öse aufweisender Ösenabschnitt des Ösen-Elements oder des Schraub-Befestigungselements und ein Flanschabschnitt des ÖsenElements oder des Schraub-Befestigungselements, an dem beispielsweise eine Durchtrittsöffnung für einen Schraubabschnitt angeordnet ist oder von dem ein Schraubabschnitt absteht, sind vorzugsweise plattenartig. Zwischen den beiden Plattenabschnitten sind zweckmäßigerweise eine oder mehrere Verstärkungsrippen vorhanden.

Zwischen der Öse und dem Schraubabschnitt ist zweckmäßigerweise ein Stützflansch vorgesehen. Der Stützflansch bildet beispielsweise einen Anschlag, wenn der Schraubabschnitt in einen Untergrund eingeschraubt wird. Beispielsweise stützt sich der Stützflansch an einer Fläche neben einer Durchstecköffnung der Halterung der Anhängekupplung ab.

Der Schraubabschnitt ist zweckmäßigerweise mit einem Querabschnitt der Öse verbunden oder bildet den Querabschnitt. Seitenschenkel der Öse stehen von dem Querabschnitt ab, wobei die Seitenschenkel und der Schraubabschnitt winkelig zueinander sind oder zueinander parallele Achsrichtungen aufweisen. Insbesondere dann, wenn der Schraubabschnitt den Querabschnitt bildet, können die Seitenschenkel direkt vom Schraubabschnitt abstehen.

Zweckmäßigerweise verlaufen die Seitenschenkel parallel zum Schraubabschnitt. Es ist aber auch möglich, dass die Seitenschenkel schräg von dem Schraubabschnitt oder dem Querabschnitt abstehen, beispielsweise auch gekrümmt oder gebogen verlaufen.

Die Öse kann winkelig zum Schraubabschnitt oder einer Durchtrittsöffnung für den Schraubabschnitt sein, beispielsweise schräg geneigt. Der Schraubabschnitt ist dann z.B. in den Untergrund gut einschraubbar und die Öse besser für den Bediener zum Einhängen des Abreißseils zugänglich sein, z.B. besser als in einem Fall, wenn der Schraubabschnitt und beispielsweise die Seitenschenkel der Öse parallel zueinander verlaufen würden.

Eine Ausführungsform der Erfindung sieht beispielsweise vor, dass eine eine Durchtrittsöffnung der Öse senkrecht durchsetzende Achse, sozusagen eine Ösenachse, und eine Schraubachse zueinander winkelig sind, beispielsweise stumpf winkelig. Die Schraubachse entspricht beispielsweise einer in Längsrichtung des Schraubabschnitts verlaufenden Achse oder durchsetzt senkrecht eine Durchstecköffnung oder Einschrauböffnung zum Durchstecken oder Einschrauben des Schraubabschnitts eines Schraubelements des Schraub-Befestigungselements.

Die Öse ist im montierten Zustand des Schraub-Befestigungselements vorzugsweise in Richtung des Kuppelelements orientiert oder steht in Richtung des Kuppelelements von der Halterung ab. Dadurch ist die Öse besonders gut zugänglich.

Eine besonders bevorzugte Ausführungsform der Erfindung sieht vor, dass ein Freiraum für eine Zugkugelkupplung freigehalten wird, d.h. dass die Öse außerhalb dieses Freiraums angeordnet ist. In dem Freiraum kann sich die Zugkugelkupplung bewegen, beispielsweise bei einer Kurvenfahrt. Ein solcher Freiraum ist beispielsweise in der Norm ECE-R 55 festgelegt, zum Beispiel im Anhang 7. In einem Raum seitlich neben dem Kuppelträger und dem Kuppelelement sowie auch oberhalb und unterhalb von Kuppelelement und Kuppelträger kann sich beispielsweise eine Deichsel oder ein sonstiges Element des Anhängers frei bewegen. Dort sollte die erfindungsgemäße Öse nicht angeordnet sein. Eine bevorzugte Maßnahme sieht dabei vor, dass die Öse winkelig zum Schraubabschnitt ist, so dass sie sich außerhalb des Freiraums befindet und somit nicht beschädigt wird, wenn das Gespann bestehend aus Kraftfahrzeug und Anhänger fährt, beispielsweise durch eine enge Kufe oder dergleichen. Die Öse kann beispielsweise nach schräg unten vom Schraubabschnitt oder einem Flanschabschnitt des Schraub-Befestigungselements abstehen.

Die Öse bzw. das Schraub-Befestigungselement ist dazu vorgesehen, den Kuppelträger an der Halterung zu befestigen. Weiterhin ist es möglich, dass die Öse bzw. das Schraub-Befestigungselement beispielsweise in die Halterung eingeschraubt ist und von dieser lediglich absteht, d.h. dass sie bzw. es an sich nicht den Zweck hat, zwei Bauteile der Anhängekupplung miteinander zu verbinden, sondern lediglich in ein Bauteil der Anhängekupplung geschraubt ist, so dass die Öse frei absteht und zur Befestigung des Abreißseils bereit ist.

Der Kuppelträger kann mit der Halterung fest verbunden sein. Bevorzugt ist der Kuppelträger mit der Halterung einstückig.

Die Halterung dieser Bauart der Anhängekupplung, aber auch der später noch beschriebenen Bauarten, weist zweckmäßigerweise einen Montageflansch auf, der zur Befestigung an dem Kraftfahrzeug oder dem erwähnten Querträger geeignet ist. An dem Montageflansch ist vorzugsweise eine Durchstecköffnung für das Schraub-Befestigungselement vorhanden.

Die Halterung kann jedoch auch zur lösbaren Befestigung des Kuppelträgers dienen. Beispielseite kann die Halterung eine beispielsweise an einer Hülse vorgesehene Einstecköffnung zum Einstecken eines Steckendes des Kuppelträgers aufweisen, so dass der Kuppelträger bei Nichtgebrauch von der Halterung entfernbar ist.

Eine weitere Ausführungsform der Erfindung sieht vor, dass der Kuppelträger an der Halterung mittels einer Lageranordnung beweglich gelagert ist, so dass das Kuppelelement oder der Kuppelträger zwischen einer zum Anhängen des Anhängers vorgesehenen Gebrauchsstellung und einer näher zum Kraftfahrzeug hin verstellten Nichtgebrauchsstellung beweglich gelagert ist. Bei Nichtgebrauch kann der Kuppelträger also beispielsweise in einen Zwischenraum zwischen einem Stoßfänger des Kraftfahrzeugs und der Karosserie des Kraftfahrzeugs verstellt werden. Es ist auch möglich, dass der Kuppelträger beispielsweise nur unter eine Heckschürze oder einem Stoßfänger des Kraftfahrzeugs zurück verstellt wird, so dass er bei Nichtgebrauch nicht stört, vorzugsweise nicht sichtbar ist.

Nachfolgend werden Ausführungsbeispiele der Erfindung anhand der Zeichnung erläutert. Es zeigen:
- Figur 1: eine perspektivische Schrägansicht einer ersten erfindungsgemäßen Anhängekupplung von hinten, deren Kuppelträger zwischen einer Gebrauchsstellung und einer in
- Figur 2: dargestellten Nichtgebrauchsstellung verstellbar ist,
- Figur 3: eine zweite erfindungsgemäße Anhängekupplung mit fest an der Halterung angeordnetem Kuppelträger, wobei die Halterung mit einem in
- Figur 4: im Detail dargestellten Schraub-Befestigungselement an einem Kraftfahrzeug oder einem Querträger befestigt ist,
- Figur 5: die Anhängekupplung gemäß Figur 3, deren Halterung jedoch mit einem ersten alternativen, in
- Figur 6: im Detail dargestellten Schraub-Befestigungselement an dem Kraftfahrzeug oder dem Querträger befestigt ist,
- Figur 7: die Anhängekupplung gemäß Figur 3, deren Halterung jedoch mit einem alternativen zweiten, in
- Figur 8: im Detail dargestellten Schraub-Befestigungselement an dem Kraftfahrzeug oder dem Querträger befestigt ist,
- Figur 9: die Anhängekupplung gemäß Figur 3, deren Halterung jedoch mit einem alternativen dritten, in
- Figur 10: im Detail dargestellten Schraub-Befestigungselement an dem Kraftfahrzeug oder dem Querträger befestigt ist,
- Figur 11: die Anhängekupplung gemäß Figur 3, deren Halterung jedoch mit einem alternativen vierten, in
- Figur 12: im Detail dargestellten Schraub-Befestigungselement an dem Kraftfahrzeug oder dem Querträger befestigt ist,
- Figur 13: die Anhängekupplung gemäß Figur 3, deren Halterung jedoch mit einem alternativen fünften, in
- Figur 14: im Detail dargestellten Schraub-Befestigungselement an dem Kraftfahrzeug oder dem Querträger befestigt ist,

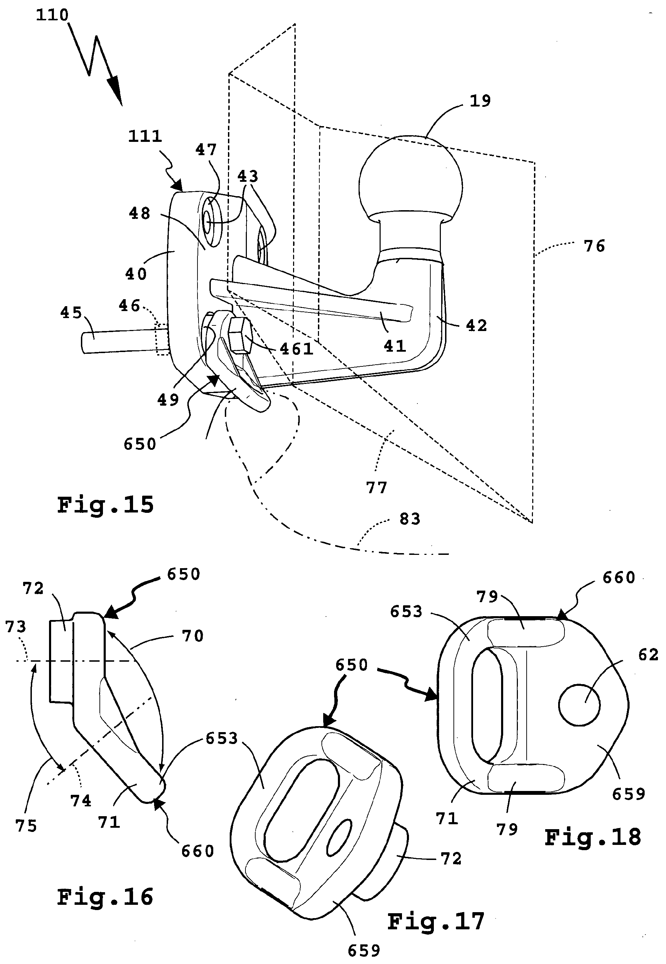

- Figur 15: die Anhängekupplung gemäß Figur 3, deren Halterung jedoch mit einem alternativen fünften, in
- Figur 16: frontal von der Seite und in
- Figur 17: von schräg seitlich und in
- Figur 18: von frontal vorn im Detail dargestellten Alternativen sechsten Schraub-Befestigungselement an dem Kraftfahrzeug oder dem Querträger befestigt ist.

Eine Anhängekupplung 10 ist beispielsweise an einem hinteren Querträger 91 eines Kraftfahrzeugs 90, z.B. eines Personen-Kraftfahrzeugs, befestigt. Eine Halterung 11 der Anhängekupplung 10 umfasst Halteelemente 12, 13, die am hinteren Querträger 91 befestigt sind, beispielsweise angeschweißt oder angeschraubt. Die Halterung 11 umfasst ferner eine Lageranordnung 14, die beispielsweise ein Kugellager 20 oder ein in der Art eines Kugellagers funktionierendes Lager umfasst. Beispielsweise umfasst die Lageranordnung 14 ein mit der Halterung 11 verbundenes, quasi fahrzeugseitiges Lagerteil 15, das in eine Lageraufnahme 16 eines Lagerteils 17 eingreift. Das Lagerteil 17 trägt einen Kuppelträger 18, der vom Lagerteil 17 absteht. Der Kuppelträger 18 ist z.B. ein Kupplungsarm. Das fahrzeugseitige Lagerteil 15 ist beispielsweise außenseitig kugelig, während die Lageraufnahme 16 in der Art einer Hohlkugel ausgestaltet ist.

Darauf kommt es jedoch nicht an. Es versteht sich, dass nämlich auch andere Lagerkonzepte, beispielsweise Schwenk-Schiebelager, reine Drehlager, kardanische Lagerungen oder dergleichen ohne weiteres möglich sind.

Der Kuppelträger 18 trägt an seinem freien, vom Lagerteil 17 entfernten Endbereichen ein Kuppelelement 19, beispielsweise eine Kupplungskugel, zum Ankuppeln einer Kupplung 81 eines Anhängers 80, von der beispielhaft ein Kupplungsmaul 82 dargestellt ist. Es versteht sich, dass auch andersartige Kuppelelemente, zum Beispiel polygonale Kuppelelemente, möglich sind.

Der Kuppelträger 18 kann mittels der Lageranordnung 14 zwischen einer Gebrauchsstellung G über mehrere Zwischenstellungen, von denen exemplarisch eine Zwischenstellung Z1 dargestellt ist, in eine Nichtgebrauchsstellung N verstellt werden, bei der sich der Kuppelträger 18 im Wesentlichen verdeckt nahe beim Kraftfahrzeug 90, insbesondere dessen Karosserie, befindet. Beispielsweise ist der Kuppelträger 18 in der Nichtgebrauchsstellung N hinter einen Stoßfänger 94 des Kraftfahrzeugs 90 zurück verstellt, so dass er von hinten oben nicht sichtbar ist.

Der Kuppelträger 18 kann mittels einer Verriegelungseinrichtung 21 in seiner Gebrauchsstellung G und der Nichtgebrauchsstellung N verriegelt werden. Beispielsweise greift ein Verriegelungselement 22, zum Beispiel ein Verriegelungsbolzen, in einer Verriegelungsstellung in eine Verriegelungsaufnahme oder Verriegelungsöffnung 23 am Lagerteil 17 ein oder beaufschlagt Formstücke 24, zum Beispiel Kugeln, so, dass sie in eine oder mehrere Verriegelungsöffnungen, z.B. eine Ringnut, mindestens eine Kugelkalotte oder dergleichen, am Lagerteil 17 eingreifen. Selbstverständlich wäre auch eine Verriegelung vom Kuppelträger her möglich, das heißt dass beispielsweise am oder im Kuppelträger oder dessen Lagerteil eines oder mehrere bewegliche Verriegelungselemente gelagert sind, die den Kuppelträger relativ zum fahrzeugseitigen Halter verriegeln können.

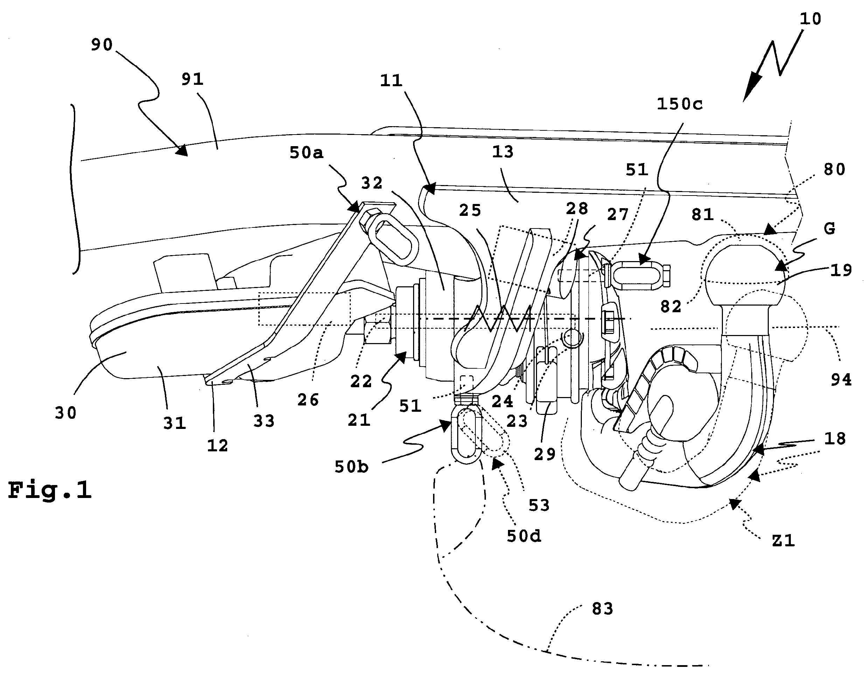

Das Verriegelungselement 22 ist durch eine Feder 25 in die Verriegelungsstellung beaufschlagt. Ein in Figur 1 von außen sichtbarer erster Antriebsmotor 26 kann das Verriegelungselement 22 in Richtung der Entriegelungsstellung antreiben, entgegen der Kraft der Feder 25, und/oder in Richtung der Verriegelungsstellung. Der Antriebsmotor 26 kann auch als ein Entriegelungsantrieb bezeichnet werden.

Weiterhin umfasst die Anhängekupplung 10 eine Positionierantriebsanordnung 27 mit einem zweiten Antriebsmotor 28, zum Beispiel einem Stellantrieb. Die Positionierantriebsanordnung 27 kann auch weitere Motoren, ein Getriebe, zum Beispiel ein Seilzug-Getriebe 29, oder dergleichen umfassen. Jedenfalls ist es möglich, den Kuppelträger 18 mit dem zweiten Antriebsmotor 28 zwischen der Gebrauchsstellung G und der Nichtgebrauchsstellung N zu verstellen.

Die Positionierantriebsanordnung 27 und die Verriegelungseinrichtung 21 sind durch eine Steuerung 30 ansteuerbar. Die Steuerung 30 ist in einem Schutzgehäuse 31 angeordnet. Das Schutzgehäuse 31 nimmt vorzugsweise auch den Antriebsmotor 26 auf.

Man erkennt, dass die Anhängekupplung 10 eine konstruktive Einheit bildet, bei der an sich keine Möglichkeit zur Befestigung eines Abreißseils des Anhängers 80 vorgesehen ist. Beispielsweise hat der Kuppelträger 18 keine Öse, in die ein Abreißseil eines Anhängers eingehängt werden kann. Dazu müsste der Kuppelträger 18 umkonstruiert werden. Beispielsweise müsste eine Gussform, die zum Gießen des Kuppelträgers 18 dient, entsprechend angepasst werden. Das ist umständlich.

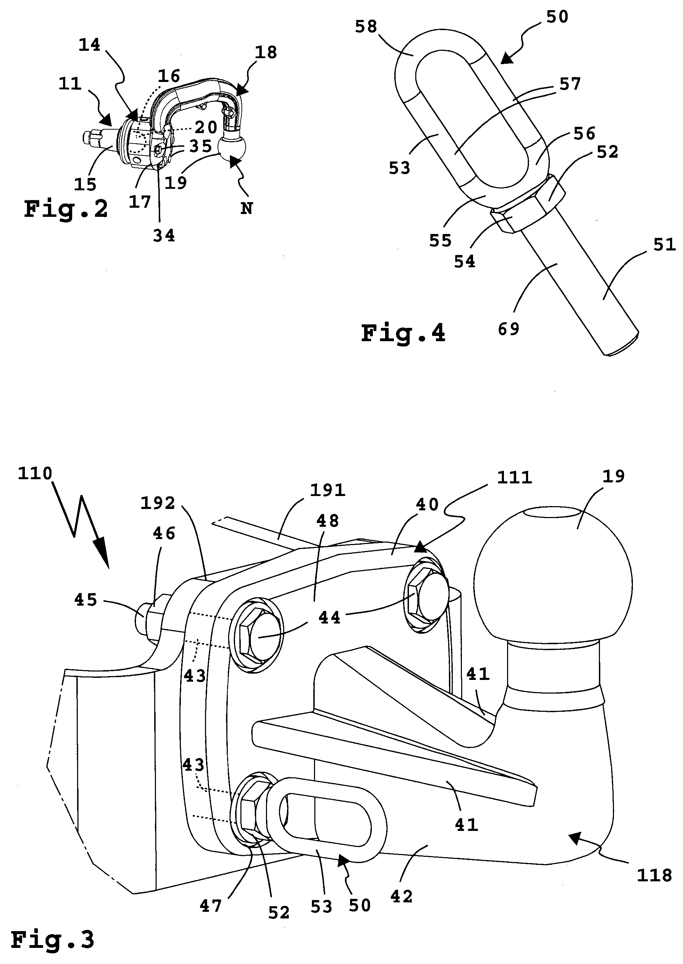

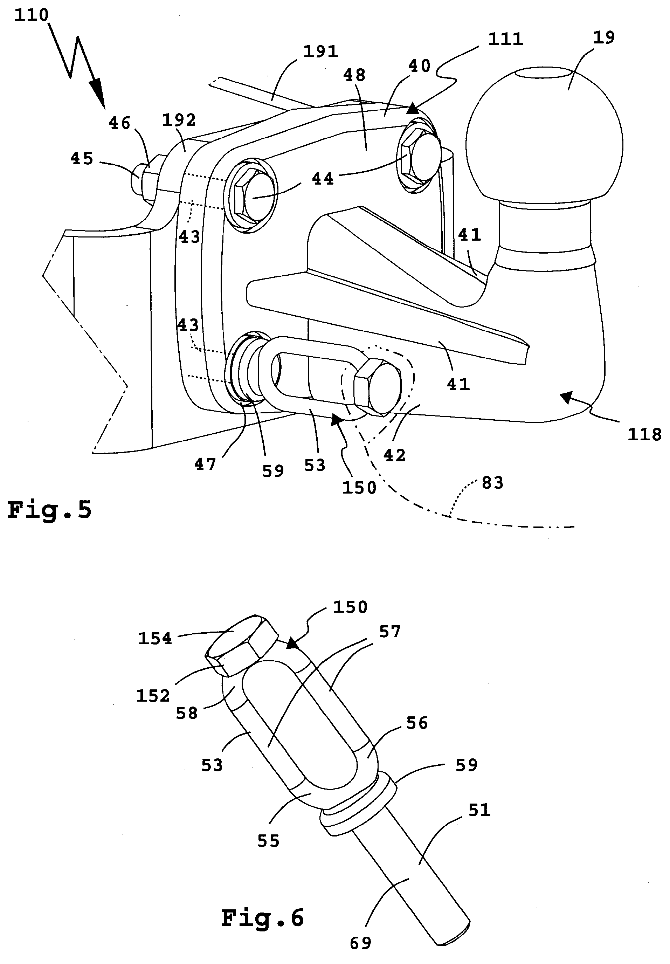

Ähnlich verhält es sich mit einer in den Figuren 3 und 5 dargestellten Anhängekupplung 110, die ebenfalls an sich keine Möglichkeit zur Befestigung eines Abreißseils aufweist.

Von einem Montageflansch 40 einer Halterung 111 der Anhängekupplung 110 steht ein in der Seitenansicht etwa L-förmiger Kuppelträger 118 ab, an dessen freiem Ende ein Kuppelelement 19, ebenfalls eine Kupplungskugel, angeordnet ist. Der Kuppelträger 118 ist mit zusätzlichen seitlichen Stützrippen 41 versehen, die ebenso wie ein Halsabschnitt 42 des Kuppelträgers 118 mit dem Montageflansch 40 verbunden sind, z.B. verklebt, verschweißt oder einstückig sind. Der Montageflansch 40 ist in der Art einer Platte ausgestaltet, die an dem Kraftfahrzeug 90, beispielsweise an einem Querträger 191 befestigbar ist. Der Querträger 191 ist ähnlich wie der Querträger 91 quer bezüglich der Fahrtrichtung des Kraftfahrzeugs 90 an diesem befestigt oder befestigbar.

Der Montageflansch 40 ist in der Draufsicht etwa rechteckförmig und hat an seinen jeweiligen Eckbereichen Durchstecköffnungen 43 zum Durchstecken von Befestigungsmitteln, beispielsweise Schraubbolzen 44, die durch die Durchstecköffnungen 43 hindurch gesteckt sind und deren Schraubabschnitte 45 einen Halteabschnitt 192 des Querträgers 191 durchdringen und auf die an der dem Montageflansch 40 abgewandten Seite des Halteabschnitts 192 Muttern 46 aufgeschraubt sind. Man erkennt eine relativ massive Konstruktion, die auch schweren Belastungen standhält. Köpfe der Schraubbolzen 44 liegen an Auflagebereichen 47 neben den Durchstecköffnungen 43 an der Frontseite 48 des Montageflansches 40 an bzw. liegen auf den Auflagebereichen 47 auf und stützen sich dort ab.

Konstruktiv sind jedoch an der Halterung 111 oder dem Kuppelträger 118 ebenso wie bei der Halterung 11 bzw. dem Kuppelträger 18 keinerlei Maßnahmen zur Befestigung eines Abreißseils getroffen. Hier schafft die Erfindung auf überraschend einfache Weise Abhilfe:
Bei der in Figur 3 dargestellten Ausführungsform der Anhängekupplung 110 ist anstelle eines der Schraubbolzen 44 ein Schraub-Befestigungselement 50 verwendet, das in Figur 4 näher dargestellt ist.

Das Schraub-Befestigungselement 50 weist einen an einem Schraubvorsprung 69 vorgesehenen Schraubabschnitt 51 auf, der eine der Durchstecköffnungen 43 durchdringt, beispielsweise eine direkt neben dem Halsabschnitt 42 befindliche, vom Kraftfahrzeug 90 hinten her betrachtet links unten angeordnete Durchstecköffnung 43. Der Schraubabschnitt 51 steht nach hinten vor den Halteabschnitt 192 vor, wobei dort, was in der Zeichnung nicht sichtbar ist, auf den Schraubabschnitt 51 ebenfalls eine Mutter 46 aufgeschraubt ist, die sich an der Rückseite des Halteabschnitts 192 abstützt. Es versteht sich, dass der Schraubabschnitt 51 auch in ein entsprechendes Gewinde einer Bohrung am Halteabschnitt 192 direkt eingeschraubt werden könnte.

Eine derartige Montagehandlung wird durch eine Drehmitnahmekontur 52 erleichtert, die zwischen dem Schraubabschnitt 51 und einer Öse 53 des Schraub-Befestigungselements 50 angeordnet ist. Die Drehmitnahmekontur 52 ist in der Art eines Schraubenkopfes ausgestaltet, d.h. sie kann sich direkt auf dem Auflagebereich 47 neben der Durchstecköffnung 43 abstützen. Die Drehmitnahmekontur 52 ist beispielsweise in der Art eines Sechskants ausgestaltet, der mittels eines Schraubenschlüssels betätigbar ist.

Die Drehmitnahmekontur 52 ist an einem Außenumfang eines Fußteils 54 vorgesehen, das zwischen der Öse 53 und dem Schraubabschnitt 51 vorgesehen ist. An dem Fußteil 54 ist die Öse 53 unmittelbar angeordnet.

Ein Bodenschenkel 55 der Öse 53 ist beispielsweise an der Frontseite des Fußteils 54 angeordnet, vorzugsweise einstückig mit demselben. Es versteht sich, dass auch eine mehrteilige Bauweise möglich ist, d.h. dass beispielsweise die Öse 53 an das Fußteil 54 angeklebt oder angeschweißt sein könnte.

An dieser Stelle sei betont, dass die Komponenten eines erfindungsgemäßen Schraub-Befestigungselements einstückig miteinander sein können, aber auch miteinander verbundene Komponenten, zum Beispiel miteinander verschweißte oder verklebte Komponenten.

Der Bodenschenkel 55 bildet einen Querabschnitt 56 der Öse 53. Der Bodenschenkel 55 hat eine U-Form. Von dem Bodenschenkel 55 stehen seitlich Seitenschenkel 57 ab. Die Seitenschenkel 57 verlaufen parallel zum Schraubabschnitt 51. Die Seitenschenkel 57 sind gerade verlaufend. An einem freien Ende der Öse 53 verbindet ein Stirnschenkel 58 die beiden Seitenschenkel 57. Auch der Stirnschenkel 58 ist u-förmig.

Die Öse 53 hat also eine etwa ovale Gestalt, wobei selbstverständlich die Rundungen nur optional sind, d.h. dass beispielsweise auch im Querschnitt polygonale, zum Beispiel rechteckige, Ösen im Rahmen der Erfindung liegen.

Bei der in Figur 5 dargestellten Anhängekupplung ist an Stelle des Schraub-Befestigungselements 50 ein anderes, in Figur 6 detaillierter dargestelltes Schraub-Befestigungselement 150 verwendet. Das Schraub-Befestigungselement 150 hat teilweise gleiche oder ähnliche Komponenten wie das Schraub-Befestigungselement 50, die insoweit also die gleichen Bezugsziffern haben.

Das Schraub-Befestigungselement 150 hat einen Stützflansch 59, der sich an dem Montageflansch 40 der Halterung 111, insbesondere an dem Auflagebereich 47 neben der Durchstecköffnung 43, abstützt. Selbstverständlich könnte sich auch die Öse 53 des Schraub-Befestigungselements 150 direkt neben der Durchstecköffnung 43 abstützen.

Der Stützflansch 59 befindet sich zwischen der Öse 53 und einem Schraubabschnitt 51 des Schraub-Befestigungselements 150.

An den Stützflansch 59 schließt sich der Bodenschenkel 55 bzw. der Querabschnitt 56 an. Am Stirnschenkel 58, d.h. am freien Ende des Schraub-Befestigungselements 150, befindet sich ein Kopfteil 154, an dessen Außenumfang eine Drehmitnahmekontur 152 zum Montieren oder Betätigen des Schraub-Befestigungselements 150 vorhanden ist.

Die Ösen 53 der Schraub-Befestigungselemente 50, 150 stehen nach vorn in Richtung des Kuppelelements 19 vor. Die beiden Seitenschenkel 57 verlaufen parallel zum Schraubabschnitt 51. Die Seitenschenkel 57 sind länger als der Stirnschenkel 58 und der Bodenschenkel 55 jeweils breit sind, das heißt in Längserstreckungsrichtung des Schraub- Befestigungselements 50, 150 hat die Öse 53 eine Längsgestalt, so dass ein Abreißseil 83 (schematisch dargestellt) sehr einfach in die Öse 53 eingehängt werden kann. An dem Abreißseil ist z.B. eine Art Karabinerhaken vorgesehen. Es ist auch möglich, dass das Abreißseil 83 durch die Öse 53 geschlauft ist.

Bei der Anhängekupplung 10 sind an einigen Stellen Schraub-Befestigungselemente 50 oder 150 vorgesehen, die beispielhaft zu verstehen sind derart, dass beispielsweise an diesen Stellen jeweils ein Abreißseil 83 eingehängt werden kann.

Beispielsweise ist das Halteelement 12 mittels eines Schraub-Befestigungselements 50a am Querträger 91 befestigt. Der in der Zeichnung nicht sichtbare Schraubabschnitt 51 des Schraub-Befestigungselements 50a durchdringt eine Durchstecköffnung des Halteelements 12. Das Halteelement 12 dient beispielsweise dazu, das Schutzgehäuse 31 bzw. die Steuerung 30 zu halten. Da der Schraubabschnitt 51 des Schraub-Befestigungselements 50a das Halteelement 12 durchdringt und direkt mit dem Querträger 91, quasi mit einer Tragstruktur des Kraftfahrzeugs 90, verschraubt ist, ist das Schraub-Befestigungselement 50a besonders belastbar, kann also beispielsweise einer Zugbelastung durch das Abreißseil 83 gut standhalten.

Das Schraub-Befestigungselement 50a dient zur Befestigung der Halterung 11 am Kraftfahrzeug 90 bzw. am Querträger 91.

Ein weiteres Schraub-Befestigungselement 50b verbindet die Halterung 11 und eine weitere Komponente der Anhängekupplung 10, beispielsweise ein Gehäuse 32 der Verriegelungseinrichtung 21 miteinander. Ein Schenkel 33 bzw. ein Abschnitt des Halteelements 13 steht nach unten vor den Querträger 91 vor und stützt das Gehäuse 32 ab. Das Schraub-Befestigungselement 50b ist durch den Schenkel 33 hindurch in das Gehäuse 32 eingeschraubt, so dass es besonders gut belastbar ist. Die Öse 53 des Schraub-Befestigungselements 50b steht nach unten vor den Querträger 91 vor, so dass sie besonders gut zugänglich für die Befestigung des Abreißseils 83 ist. Zudem verbindet das Schraub-Befestigungselement 50b besonders belastbare Komponenten der Anhängekupplung 10, nämlich den massiv ausgeführten Halter bzw. das Halteelement 13 mit dem ebenfalls belastbaren, beispielsweise aus Metallguss bestehenden oder als Schmiedeteil oder dergleichen ausgestalteten, Gehäuse 32, so dass die Öse 53 des Schraub-Befestigungselements 50b gut belastbar ist.

Weiterhin kann ein erfindungsgemäßes Schraub-Befestigungselement auch dazu dienen, beispielsweise Gehäuseteile einer Anhängekupplung gemäß der Erfindung miteinander und/oder einen Kuppelträger mit einer sonstigen Komponente der Anhängekupplung zu verbinden.

So ist beispielsweise ein Schraub-Befestigungselement 150c dazu vorgesehen, ein Montageelement 34 am fahrzeugseitigen Ende des Kuppelträgers 18 mit dem Lagerteil 17 zu verbinden. Das Montageelement 34 ist in der Art einer Kappe mit einigen Schraubbolzen 35 an dem ansonsten in der Art einer Hülse ausgestalteten Lagerteil 17 befestigt. Einer der Schraubbolzen 44 ist bei dem Ausführungsbeispiel gemäß Figur 1 durch das Schraub-Befestigungselement 150c ersetzt. Der Vorteil dieser Konstruktion ist auch darin zu sehen, dass die Öse 53 des Schraub-Befestigungselements 150c mit dem Kuppelträger 18 mitschwenkt, wenn dieser aus der Gebrauchsstellung G in die Nichtgebrauchsstellung N und umgekehrt schwenkt, so dass die Öse 53 in der Gebrauchsstellung G stets komfortabel zugänglich ist.

Zwar ist es vorteilhaft, wenn eine Öse, zumindest deren Seitenschenkel, parallel zum Schraubabschnitt des Schraub-Befestigungselements verlaufen, wie beispielsweise bei den Schraub-Befestigungselementen 50, 150 der Fall. In Figur 1 ist exemplarisch ein Schraub-Befestigungselement 50d eingezeichnet, dessen Öse 53 schräg geneigt zum Schraubabschnitt 51 ist. Somit kann die Öse 53 beispielsweise besser für den Bediener zugänglich, zum Beispiel zum Einhängen des Abreißseils 83, und/oder näher beim Kupplungsarm oder Kuppelträger angeordnet sein.

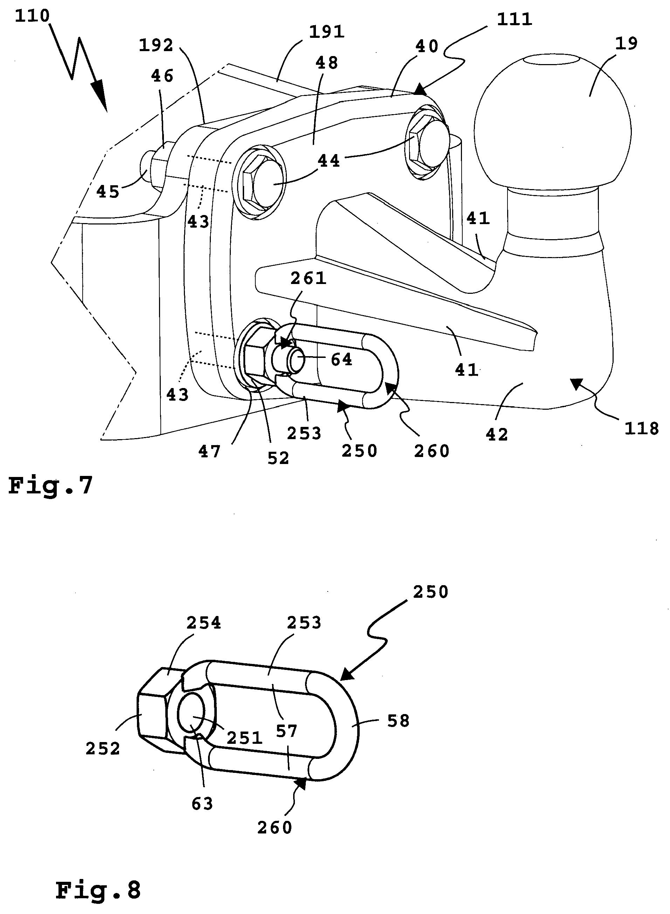

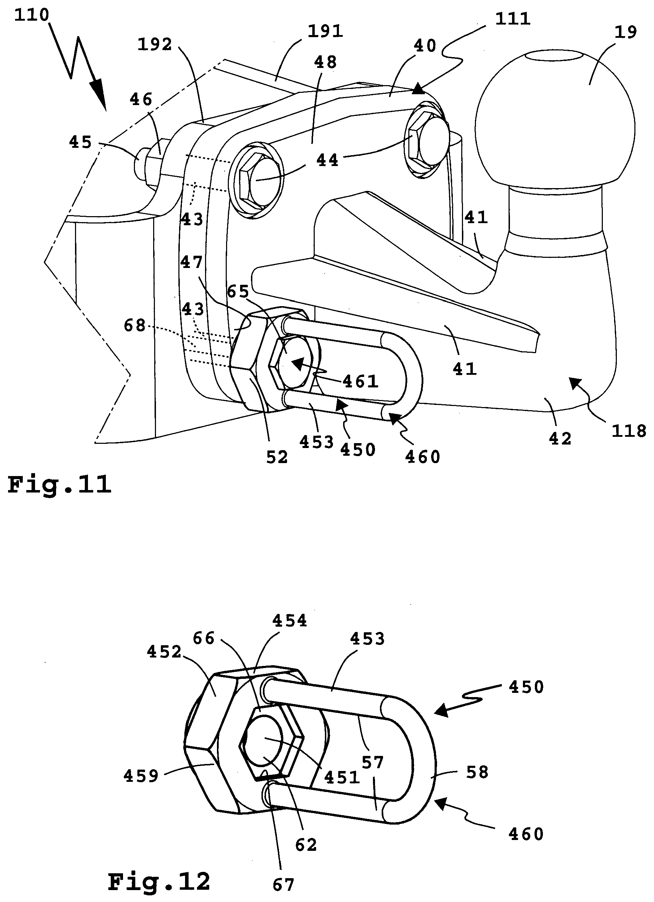

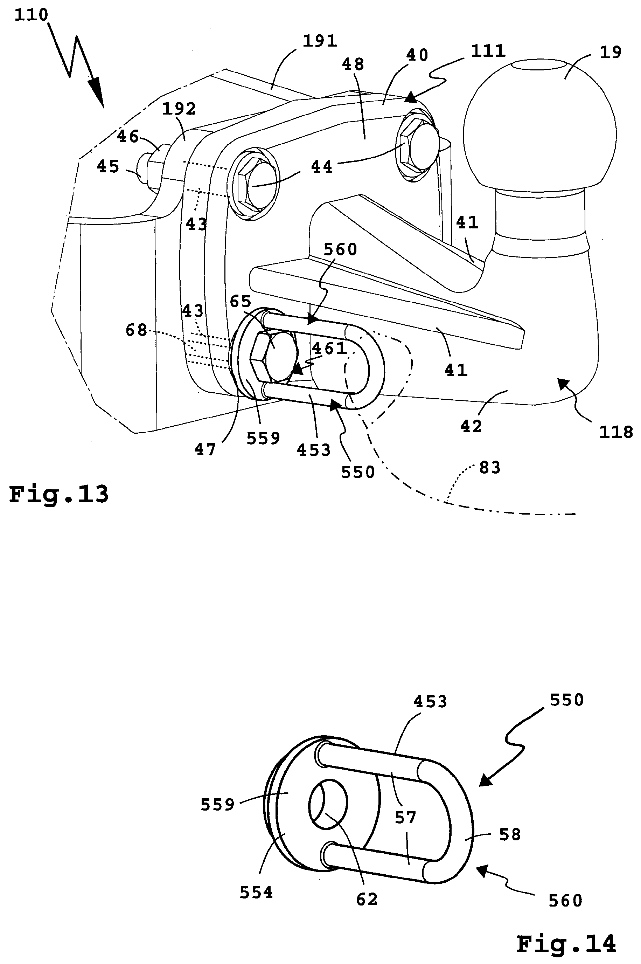

Bei den Ausführungsbeispielen gemäß Figuren 7-14 sind Schraub-Befestigungselemente 250, 350, 450, 550 verwendet, die mehrteilig, insbesondere zweiteilig, sind und Ösen-Elemente 260, 360 und Schraubelemente 261 bzw. Ösen-Elemente 460, 560 sowie zugehörige Schraubelemente 461 umfassen. Insoweit die Schraub-Befestigungselemente 250, 350, 450, 550 gleiche oder gleichartige Komponenten haben wie die Schraub-Befestigungselemente 50 und 150 sind gleiche Bezugszeichen verwendet.

Die Schraub-Befestigungselemente 250 und 350 umfassen ein Fußteil 254, das in der Gestalt einer Schraub-Mutter ausgestaltet ist. Das Fußteil 254 dient dazu, sich an einem Untergrund, beispielsweise der Halterung 111 abzustützen und trägt jeweils eine Öse 253. Die Öse 253 steht in Richtung einer Schraubachse, in die ein Schraubabschnitt 64 des Schraubelements 261 in das Fußteil 254 eingeschraubt wird, von dem Fußteil 254 ab.

Das Fußteil 254 hat eine Einschrauböffnung 63, an der ein Innengewinde angeordnet ist. Dieses Innengewinde ist ein Bestandteil eines Schraubabschnitts 251 des Ösen-Elements 260.

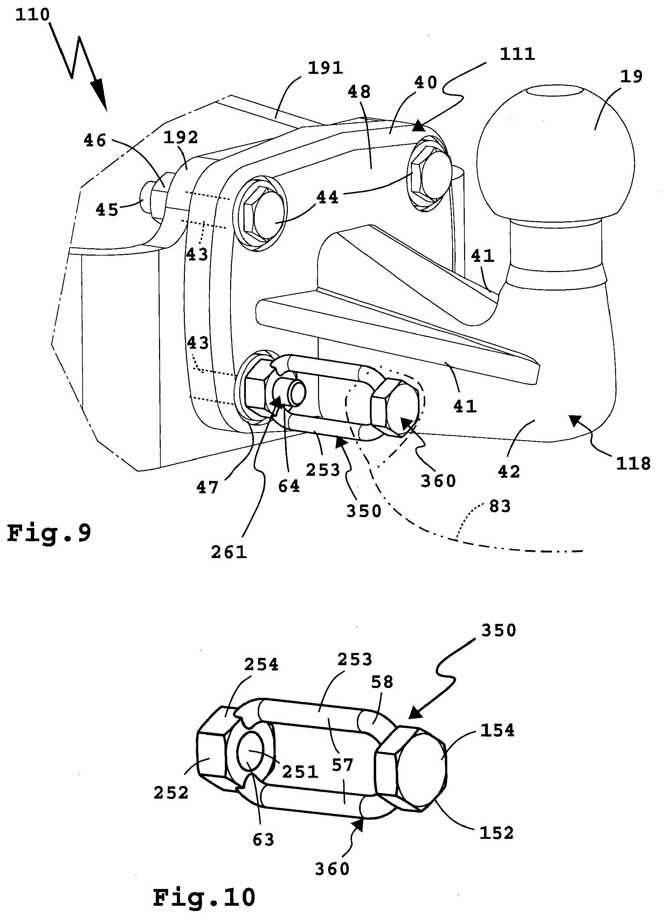

Das Schraubelement 261 ist beispielsweise als ein Schraubbolzen ausgestaltet, dessen in der Figur 7 oder Figur 9 nicht sichtbarer Kopf sich an der Rückseite des Halteabschnitts 192, mithin also des Querträgers 191, abstützt, während der Schraubabschnitt 64 des Schraubelements 261 die Durchstecköffnung 43 der Halterung 111 durchdringt und nach vorn, das heißt vor die Frontseite 48, vorsteht und in die Einschrauböffnung 63 eingeschraubt ist. Beispielsweise wird dazu der in der Zeichnung nicht sichtbare Kopf des Schraubelements 461 gedreht, während auf der anderen Seite, d.h. an der Frontseite 48, eine Drehmitnahmekontur 252 am Außenumfang des Fußteils 254 mittels eines Schraubenschlüssels oder eines sonstigen Werkzeugs festgehalten wird.

Auf diesem Wege kann auch die Drehorientierung der Öse 253 festgelegt werden. Selbstverständlich ist es auch möglich, das Ösen-Element 260 bei der Montage bzw. beim Verschrauben mit dem Schraubelement 261 zu drehen.

Seitenschenkel 57 der Öse 253 stehen direkt von Fußteilen 254 der Ösen-Elemente 260, 360 ab. Die freien Enden der Ösen 253 sind durch einen U-förmigen Stirnschenkel 58 miteinander verbunden.

Das Schraub-Befestigungselement 350 gleicht im wesentlichen dem Schraub-Befestigungselement 250, hat jedoch zusätzlich ähnlich wie das Schraub-Befestigungselement 150 ein Kopfteil 154, an dem eine weitere Drehmitnahmekontur 152 zur Verfügung steht. Somit kann also das Schraub-Befestigungselement 350 an der Drehmitnahmekontur 152 und/oder der Drehmitnahmekontur 252 gehalten oder betätigt werden.

Bei Schraub-Befestigungselementen 450 und 550 wird das ÖsenElement 460, 560 mittels eines Schraubelements 461 mit einem Gegenhalt, beispielsweise dem Querträger 191 bzw. der Halterung 111 und/oder einer Schraub-Mutter, verschraubt.

Eine Öse 453 des jeweiligen Schraub-Befestigungselements 450 oder 550 ist ähnlich wie die Ösen 253 ausgestaltet, hat jedoch grundsätzlich eine U-Form. Seitenschenkel 57 der Öse 453 stehen von Fußteilen 454 oder 554 der Ösen-Elemente 460, 560 ab. Die freien Enden der Ösen 453 sind durch einen U-förmigen Stirnschenkel 58 miteinander verbunden.

Die Fußteile 454 und 554 kommen im montierten Zustand der Schraub-Befestigungselemente 450 und 550 zwischen einem Kopf 65 des Schraubelements 461 und dem Untergrund, beispielsweise der Frontseite 48 der Halterung 111 zu liegen. Die Fußteile 454 und 554 sind z.B. in der Art von Zwischen- oder Stütz-Flanschen 459, 559 ausgestaltet. Ein Schraubabschnitt 68 des Schraubelements 461 durchdringt Durchstecköffnungen 62 der Fußteile 454 oder 554, sowie die sich durch die Halterung 111 und den Querträger 191 erstreckende Durchstecköffnung 43, so dass an der Rückseite des Halteabschnitts 192 beispielsweise Muttern in der Art der Muttern 46 auf die Schraubabschnitte 68 aufgeschraubt werden können.

Bei dem Schraub-Befestigungselement 450 wird die Montage des Schraubelements 461 dadurch erleichtert, dass an dem Fußteil 454 eine Aufnahme 66 für den Kopf 65 vorhanden ist. Die Aufnahme 66 ist als eine Vertiefung ausgestaltet und hat an ihrem Innenumfang eine Drehsicherungskontur 67, die zum Kopf 65 passt. Wenn also der Kopf 65 in die Aufnahme 66 eingesteckt ist, kann er sich nicht mehr drehen. Der Bediener kann dann beispielsweise eine zweckmäßigerweise am Außenumfang des Fußteils 454 vorgesehene Drehmitnahmekontur 452 festhalten, zum Beispiel mittels eines Gabel-Schlüssels, um das Schraubelement 461 drehfest zu halten oder zu drehen. An dieser Stelle sei bemerkt, dass die äußere Drehmitnahmekontur 452 eine Option darstellt, das heißt dass es selbstverständlich auch beispielsweise durch Ergreifen der Öse 453 möglich ist, das Ösen-Element 460 und somit das in die Aufnahme 66 eingesteckte Schraubelement 461 drehfest zu halten.

Weiterhin sei bemerkt, dass zwar die Drehmitnahmekonturen 52, 252 und 452 sowie auch die Drehmitnahmekontur oder Drehsicherungskontur 67 jeweils Sechskant-Konturen sind. Diese Geometrie ist jedoch nur eine Option, d.h. eine drehfeste Festlegung oder eine Drehmitnahme wäre auch ohne weiteres mit anderen Konturen möglich, beispielsweise sonstigen polygonalen Geometrien.

Das Schraub-Befestigungselement 550 umfasst ein Ösen-Element 560, dessen Fußteil 454 lediglich eine Durchstecköffnung 62 aufweist, durch die der Schraubabschnitt 68 des Schraubelements 461 durchzustecken ist. Somit bildet also das Fußteil 554 sozusagen einen Zwischenflansch oder Stützflansch 559. Weil keine Drehsicherungskontur am Fußteil 454 zur Verdrehsicherung des Schraubelements 461 vorhanden ist, kann die Drehlage der Öse 453 einfach geändert werden, beispielsweise durch Lockern der Verbindung zwischen dem Schraubelement 461 und der in der Zeichnung nicht sichtbaren, auf den Schraubabschnitt 68 aufgeschraubten Mutter.

Das Schraub-Befestigungselement 650, das im Zusammenhang mit der Anhängekupplung 110 genutzt wird und deren Halterung 111 beispielsweise am Querträger des Kraftfahrzeugs 90 hält, umfasst ein Ösen-Element 660 und das bereits erläuterte Schraubelement 461. Beispielsweise kann das Schraubelement 461 durch eine Durchstecköffnung 62 des Ösen-Elements 660 und weiterhin durch eine der Durchstecköffnungen 43 der Halterung 111 durchgesteckt werden und von der Rückseite her mittels einer Mutter 46 gesichert werden. Dann ist das Ösen-Element 660 fest montiert. Der Schraubabschnitt 45 könnte aber auch in eine Schrauböffnung, die beispielsweise direkt am Querträger des Kraftfahrzeugs 90 angeordnet ist, eingeschraubt werden.

Das Ösen-Element umfasst einen Stützflansch 659, an dem die Durchstecköffnung 62 angeordnet ist. Der Stützflansch 659 stützt beispielsweise einen Kopf des Schraubbolzens oder Schraubelements 461. Der Stützflansch 659 ist plattenartig. Von dem Stützflansch 659 steht in einem Winkel 70 ein Ösenabschnitt 71 winkelig ab.

Der Ösenabschnitt 71 und der Stützflansch 659 sind vorzugsweise plattenartig. Bevorzugt sind der Ösenabschnitt 71 und der Stützflansch 659 einstückig.

Zwischen dem Ösenabschnitt 71 und dem Stützflansch 659 erstrecken sich seitlich neben einer Durchtrittsöffnung für das Abreißseil 83 der Öse 653 Verstärkungsrippen 79. Die beiden Verstärkungsrippen 79 sind derart neben der Durchtrittsöffnung bzw. der Öse 653 und der Durchstecköffnung 62 angeordnet, dass diese frei sind.

Von dem Stützflansch 659 steht an seiner von dem Ösenabschnitt 71 abgewandten Seite ein Stützkörper 72 ab, der dazu vorgesehen ist, in eine Aufnahme 49 einzudringen, die mit der Durchstecköffnung 43 koaxial ist. Die Aufnahme 49 ist beispielsweise zylindrisch. Der Stützkörper 72 ist an seinem Außenumfang ebenfalls zylindrisch, so dass er vorzugsweise formschlüssig in die Aufnahme 49 passt und sich an deren Innenumfang abstützt.

Es ist aber auch möglich, dass der Stützkörper 72 nicht am Innenumfang der Aufnahme 49 anliegt, sondern nur an deren Boden abgestützt ist. Dann wäre der Stützkörper 72 beispielsweise ein Distanzkörper zum Herstellen einer Distanz zwischen einerseits dem Boden der Aufnahme 49 und andererseits dem Stützflansch 659.

Der Stützkörper 72 kann auch als Distanzelement dienen. Der Stützkörper 72 bzw. das Distanzelement muss nicht in einer Bohrung, zum Beispiel in der Aufnahme 49, angeordnet sein. Wenn zum Beispiel die Aufnahme 49 nicht vorhanden wäre, könnte sich der Stützkörper 72 auf der Frontseite 48 der Halterung 111 abstützen und dafür sorgen, dass die Öse 653 weiter in Richtung des Bedieners bzw. weiter vor einen Stoßfänger des Kraftfahrzeugs 90 vorsteht.

Der Stützflansch 659 und der Ösenabschnitt 71 sind zueinander winkelig. Eine die Durchstecköffnung durchsetzende Schraubachse 73 und eine die Öse 653 durchsetzende Achse 74 stehen in in einem Winkel 75 zueinander. Die Winkel 75 und 70 ergeben in Summe 180°.

Die winkelige Anordnung des Ösenabschnitts 71 zum Stützflansch 659 ermöglicht es auch, dass ein Freiraum 76 neben dem Kuppelträger 118 sowie dem Kuppelelement 19 frei bleibt, so dass eine in der Zeichnung nicht sichtbare Deichsel oder Zugkugelkupplung des Anhängers einen großen, normgerechten Bewegungsfreiraum hat. Beispielsweise erstreckt sich der Ösenabschnitt 71 nach schräg unten unter eine untere Grenzfläche 77 des Freiraumes 76, so dass die Öse 653 zwar gut zugänglich ist, sich jedoch außerhalb des Freiraums 76 befindet. Die angewandte Norm zur Definition des Freiraums 76 ist beispielsweise die Norm ECE-R 55. Selbstverständlich könnten auch andere Normen, beispielsweise internationale Normen für das außereuropäische Ausland, angewendet werden.

Weiterhin ist es (nicht dargestellt) möglich, das zwischen einerseits dem Schraubabschnitt oder der Schraub- oder Durchstecköffnung des Schraubelements oder Ösenelements gemäß der Erfindung und andererseits der Öse noch ein Abstandsabschnitt vorhanden ist, so dass die Öse zu einem Bediener vorsteht und somit bequem zum Einhängen des Abreißseils zur Verfügung steht. Der Abstandsabschnitt ist zweckmäßigerweise so getroffen, dass er sich außerhalb des Freiraums gemäß Norm, zum Beispiel des Freiraums 76, befindet.

## Patentansprüche

1. Anhängekupplung für ein Kraftfahrzeug (90), mit einem an einem Kuppelträger (18; 118) angeordneten Kuppelelement (19) zum Ankuppeln eines Anhängers (80) und mit einer an dem Kraftfahrzeug befestigbaren Halterung (11; 111) für den Kuppelträger (18; 118), und mit mindestens einem einen Schraubabschnitt (51; 251) aufweisenden Schraub-Befestigungselement (50 - 650) zur Verbindung zweier Bauteile der Anhängekupplung (10;110) oder zur Verbindung der Halterung (11; 111) mit dem Kraftfahrzeug (90), wobei das mindestens eine Schraub-Befestigungselement (50 - 650) eine Öse (53; 253; 453; 653) zum Anhängen eines Anhängerabreißseils (83) aufweist, **dadurch gekennzeichnet, dass** der Kuppelträger (18; 118) mit der Halterung (11; 111) einstückig ist und die Halterung (11; 111) mindestens einen Montageflansch (40) aufweist, der zur Befestigung an dem Kraftfahrzeug (90) oder einem an dem Kraftfahrzeug (90) in Querrichtung desselben verlaufenden Querträger (91; 191) befestigt oder befestigbar ist, und/oder dass sie einen Querträger (91; 191) umfasst, der zur Befestigung an dem Kraftfahrzeug vorgesehen ist und im am Kraftfahrzeug (90) montierten Zustand quer zu dessen Fahrtrichtung verläuft, und die Halterung (11; 111) mit dem mindestens einen Schraub-Befestigungselement (50 - 650) an dem Querträger (91; 191) befestigt ist.

2. Anhängekupplung nach Anspruch 1, **dadurch gekennzeichnet, dass** die Halterung (11; 111) eine Durchstecköffnung (43) zum Durchstecken des Schraubabschnitts (51; 251) des mindestens einen Schraub-Befestigungselements (50 - 650) aufweist.

3. Anhängekupplung nach Anspruch 1 oder 2, **dadurch gekennzeichnet, dass** das mindestens eine Schraub-Befestigungselement (50 - 650) mindestens eine Drehmitnahmekontur (52-252; 452), insbesondere eine Sechskantkontur, für ein Montagewerkzeug aufweist, wobei die mindestens eine Drehmitnahmekontur (52-252; 452) zweckmäßigerweise eine zwischen dem Schraubabschnitt (51; 251) und der Öse (53; 253; 453; 653) angeordnete Drehmitnahmekontur (52-252; 452) und/oder eine an einem von dem Schraubabschnitt (51; 251) entfernten freien Ende der Öse (53; 253; 453; 653) angeordnete Drehmitnahmekontur (52-252; 452) umfasst und/oder an einem Außenumfang eines plattenförmigen Körpers und/oder eines Fußteils (54; 254-454) und/oder eines Kopfteils (154) angeordnet ist.

4. Anhängekupplung nach einem der vorhergehenden Ansprüche, **dadurch gekennzeichnet, dass** das mindestens eine Schraub-Befestigungselement (50 - 650) mehrteilig ist und ein den Schraubabschnitt (51; 251) aufweisendes Schraubelement (261, 461) und ein die Öse (53; 253; 453; 653) zum Anhängen eines Anhängerabreißseils (83) aufweisendes Ösen-Element (260-660) aufweist, wobei an dem Ösen-Element (260-660) eine Durchstecköffnung (62) oder eine Einschrauböffnung (63) zum Durchstecken oder Einschrauben des Schraubabschnitts (51; 251) des Schraubelements (261, 461) vorhanden ist, wobei vorteilhaft an der Einschrauböffnung (63) oder der Durchstecköffnung (62) eine Drehsicherungskontur (67) zum verdrehsicheren Halten des Schraubelements (261, 461), insbesondere eines Kopfes des Schraubelements (261, 461), angeordnet ist.

5. Anhängekupplung nach einem der vorhergehenden Ansprüche, **dadurch gekennzeichnet, dass** der Schraubabschnitt (51; 251) ein an einem Schraubvorsprung (69) angeordnetes Außengewinde und/oder ein an einer Einschrauböffnung (63) angeordnetes Innengewinde umfasst.

6. Anhängekupplung nach einem der vorhergehenden Ansprüche, **dadurch gekennzeichnet, dass** die Öse (53; 253; 453; 653) des mindestens einen Schraub-Befestigungselements (50 - 650) bezüglich einer Längserstreckungsrichtung des Schraub-Befestigungselements (50 - 650) eine Längsgestalt hat, wobei eine Querbreite der Öse (53; 253; 453; 653) quer zu der Längserstreckungsrichtung kleiner als eine sich in der Längserstreckungsrichtung erstreckende Länge der Öse (53; 253; 453; 653) ist.

7. Anhängekupplung nach einem der vorhergehenden Ansprüche, **dadurch gekennzeichnet, dass** die Öse (53; 253; 453; 653) des mindestens einen Schraub-Befestigungselements (50 - 650) eine mechanische Verstärkung, insbesondere eine Rippe, zur Erhöhung der Belastbarkeit der Öse (53; 253; 453; 653) aufweist und/oder dass zwischen der Öse (53; 253; 453; 653) und dem Schraubabschnitt (51; 251) ein Stützflansch (59) vorgesehen ist.

8. Anhängekupplung nach einem der vorhergehenden Ansprüche, **dadurch gekennzeichnet, dass** eine eine Durchtrittsöffnung der Öse senkrecht durchsetzende Achse (74) und eine Schraubachse (73), die in Längsrichtung des Schraubabschnitts (51; 251) verläuft oder eine Durchstecköffnung (62) oder Einschrauböffnung (63) zum Durchstecken oder Einschrauben des Schraubabschnitts (51; 251) eines Schraubelements (261, 461) des Schraub-Befestigungselements (50 - 650) senkrecht durchsetzt, zueinander winkelig sind.

9. Anhängekupplung nach einem der vorhergehenden Ansprüche, **dadurch gekennzeichnet, dass** die Öse (53; 253; 453; 653) im montierten Zustand außerhalb eines insbesondere durch die Norm ECE-R 55 festgelegten, Freiraums für eine Zugkugelkupplung angeordnet ist, wobei der Freiraum einen Bewegungsraum für die Zugkugelkupplung freilässt.

10. Anhängekupplung nach einem der vorhergehenden Ansprüche, **dadurch gekennzeichnet, dass** das Schraub-Befestigungselement (50-650) einen insbesondere von einem Flanschabschnitt oder Flanschkörper abstehenden Stützkörper (73) zum insbesondere formschlüssigen Eingriff in eine zu einer Gewindebohrung oder Durchstecköffnung der Halterung (11; 111) oder des durch das Schraub-Befestigungselement (50-650) verbundenen Bauteils koaxialen Aufnahme aufweist.

11. Anhängekupplung nach einem der vorhergehenden Ansprüche, **dadurch gekennzeichnet, dass** der Schraubabschnitt (51; 251) mit einem Querabschnitt (56) der Öse (53; 253; 453; 653) verbunden ist oder den Querabschnitt (56) bildet, wobei Seitenschenkel (57) der Öse (53; 253; 453; 653) von dem Querabschnitt (56) abstehen, wobei die Seitenschenkel (57) und der Schraubabschnitt (51; 251) winkelig zueinander sind oder zueinander parallele Achsrichtungen aufweisen.

12. Anhängekupplung nach einem der vorhergehenden Ansprüche, **dadurch gekennzeichnet, dass** die Öse (53; 253; 453; 653) im montierten Zustand des Schraub-Befestigungselements (50 - 650) in Richtung des Kuppelelements (19) orientiert ist oder in Richtung des Kuppelelements (19) von der Halterung (11; 111) absteht und/oder dass die Halterung (11; 111) mit mindestens einem weiteren Schraubbolzen an dem Kraftfahrzeug (90) oder einem Querträger (91; 191) für das Kraftfahrzeug befestigbar oder befestigt ist.

13. Anhängekupplung nach einem der vorhergehenden Ansprüche, **dadurch gekennzeichnet, dass** der Kuppelträger (18; 118) fest mit der Halterung (11; 111) verbunden ist oder dass der Kuppelträger (18; 118) an der Halterung (11; 111) mittels einer Lageranordnung (14) zwischen einer zum Anhängen des Anhängers (80) vorgesehenen Gebrauchsstellung und einer näher zum Kraftfahrzeug hin verstellten Nichtgebrauchsstellung beweglich gelagert ist oder dass der Kuppelträger (18; 118) lösbar an der Halterung (11; 111) befestigbar ist.

14. Anhängekupplung nach einem der vorhergehenden Ansprüche, **dadurch gekennzeichnet, dass** das mindestens eine Schraub-Befestigungselement (50 - 650) an dem Kuppelträger (18; 118) oder an einem Befestigungsort des Kuppelträgers (18; 118), insbesondere mit einer Komponente der Lageranordnung (14), angeordnet ist.

## Claims

1. Trailer coupling for a motor vehicle (90), with a coupling element (19) fitted to a coupling member (18; 118) for the coupling of a trailer (80) and with a mounting (11; 111) for the coupling member (18; 118), attachable to the motor vehicle, and with at least one screw mounting element (50-650) with a screw section (51; 251) for connecting two parts of the trailer coupling (10; 110) or for connecting the mounting (11; 111) to the motor vehicle (90), wherein the screw mounting element or elements (50-650) has an eye (53; 253; 453; 653) for attaching a trailer breakaway cable (83), **characterised in that** the coupling member (18; 118) is integral with the mounting (11; 111) and the mounting (11; 111) has at least one mounting flange (40) which is or may be fastened to the motor vehicle (90) or to a cross-member (91; 191) on the motor vehicle (90) and running in its the lateral direction, and/or that it includes a cross-member (91; 191) which is provided for attaching to the motor vehicle and, when fitted to the motor vehicle (90), runs transversely to the direction of travel of the latter, and the mounting (11; 111) is fastened to the cross-member (91; 191) by the screw mounting element or elements (50-650).

2. Trailer coupling according to claim 1, **characterised in that** the mounting (11; 111) has a push-through hole (43) for pushing through the screw section (51; 251) of the screw mounting element or elements (50-650).

3. Trailer coupling according to claim 1 or 2, **characterised in that** the screw mounting element or elements (50-650) has or have at least one rotary driving contour (52-252; 452), in particular a hexagonal contour, for a fitting tool, wherein the rotary driving contour or contours (52-252; 452) expediently include a rotary driving contour (52-252; 452) provided between the screw section (51; 251) and the eye (53; 253; 453; 653) and/or a rotary driving contour (52-252; 452) provided at a free end of the eye (53; 253; 453; 653) at a distance from the screw section (51; 251) and/or is provided on an outer periphery of a plate-shaped body and/or a base section (54; 254-454) and/or a head section (154).

4. Trailer coupling according to any of the preceding claims, **characterised in that** the screw mounting element or elements (50-650) is or are multi-part, with a screw element (261, 461) having the screw section (51; 251) and an eye element (260-660) having the eye (53; 253; 453; 653) for attaching a trailer breakaway cable (83), wherein the eye element (260-660) has a push-through hole (62) or a screw-in orifice (63) for pushing through or screwing-in the screw section (51; 251) of the screw element (261, 461), wherein advantageously there is provided on the screw-in orifice (63) or the push-through hole (62) a twist locking contour (67) for anti-twist locking of the screw element (261, 461), in particular a head of the screw element (261, 461).

5. Trailer coupling according to any of the preceding claims, **characterised in that** the screw section (51; 251) includes an external thread provided on a screw projection (69) and/or an internal thread provided on a screw-in orifice (63).

6. Trailer coupling according to any of the preceding claims, **characterised in that** the eye (53; 253; 453; 653) of the screw mounting element or elements (50-650) has an elongated shape relative to a direction of longitudinal extent of the screw mounting element or elements (50-650), wherein a lateral width of the eye (53; 253; 453; 653) transversely to the direction of longitudinal extent is less than a length of the eye (53; 253; 453; 653) extending in the direction of longitudinal extent.

7. Trailer coupling according to any of the preceding claims, **characterised in that** the eye (53; 253; 453; 653) of the screw mounting element or elements (50-650) has a mechanical reinforcement, in particular a rib, to increase the loading capacity of the eye (53; 253; 453; 653), and/or that a support flange (59) is provided between the eye (53; 253; 453; 653) and the screw section (51; 251).

8. Trailer coupling according to any of the preceding claims. **characterised in that** an axis (74) passing vertically through a through opening of the eye, and a screw axis (73) running in the longitudinal direction of the screw section (51; 251) or passing vertically through a push-through hole (62) or screw-in orifice (63) for pushing through or screwing-in the screw section (51; 251) of a screw element (261, 461) of the screw mounting element (50-650), are at an angle to one another.

9. Trailer coupling according to any of the preceding claims, **characterised in that** the eye (53; 253; 453; 653) in the assembled state is located outside an open space, in particular as specified by standard ECE-R 55, for a tow ball coupling, wherein the open space allows space for movement of the tow ball coupling.

10. Trailer coupling according to any of the preceding claims, **characterised in that** the screw mounting element (50-650) has a support body (73), in particular protruding from a flange section or flange body, for in particular positive engagement in a seating which is coaxial to a tapped hole or push-through hole of the mounting (11; 111) or of the component connected by the screw mounting element (50-650).

11. Trailer coupling according to any of the preceding claims, **characterised in that** the screw section (51; 251) is connected to a transverse section (56) of the eye (53; 253; 453; 653) or forms the transverse section (56), wherein side legs (57) of the eye (53; 253; 453; 653) protrude from the transverse section (56), wherein the side legs (57) and the screw section (51; 251) are at an angle to one another or have axial directions parallel to one another.

12. Trailer coupling according to any of the preceding claims, **characterised in that** the eye (53; 253; 453; 653), in the fitted state of the screw mounting element (50-650), is oriented in the direction of the coupling element (19) or protrudes from the mounting (11; 111) in the direction of the coupling element (19) and/or that the mounting (11; 111) is or may be attached to the motor vehicle (90) or to a cross-member (91; 191) for the motor vehicle by at least one further bolt.

13. Trailer coupling according to any of the preceding claims, **characterised in that** the coupling member (18; 118) is connected permanently to the mounting (11; 111) or that the coupling member (18; 118) is mounted on the mounting (11; 111) by means of a bearing assembly (14) so as to be movable between a position of use provided for attaching the trailer and an inoperative position shifted closer to the motor vehicle, or that the coupling member (18; 118) may be attached releasably to the mounting (11; 111).

14. Trailer coupling according to any of the preceding claims, **characterised in that** the screw mounting element or elements (50-650) is or are fitted to the coupling member (18; 118) or to an attaching point of the coupling member (18; 118), in particular by a component of the bearing assembly (14).

## Revendications

1. Attelage pour un véhicule automobile (90) avec un élément d'attelage (19) agencé sur un support d'attelage (18 ; 118) pour l'attelage d'une remorque (80) et avec un support (11 ; 111) pouvant être fixé sur le véhicule automobile pour le support d'attelage (18 ; 118), et avec au moins un élément de fixation à vis (50-650) présentant une section de vis (51 ; 251) pour la liaison de deux composants de l'attelage (10; 110) ou pour la liaison du support (11 ; 111) avec le véhicule automobile (90), dans lequel l'au moins un élément de fixation à vis (50-650) présente un oeillet (53 ; 253 ; 453 ; 653) pour l'attelage d'un câble de rupture d'attelage (83), **caractérisé en ce que** le support d'attelage (18 ; 118) est d'un seul tenant avec le support (11 ; 111) et le support (11 ; 111) présente au moins une bride de montage (40) qui est fixée ou peut être fixée pour la fixation au véhicule automobile (90) ou une traverse (91 ; 191) s'étendant sur le véhicule automobile (90) dans le sens transversal à celui-ci et/ou **en ce qu'**il comporte une traverse (91 ; 191) qui est prévue pour la fixation au véhicule automobile et s'étend dans l'état monté sur le véhicule automobile (90) transversalement à son sens de déplacement, et le support (11 ; 111) est fixé avec l'au moins un élément de fixation à vis (50-650) à la traverse (91 ; 191).

2. Attelage selon la revendication 1, **caractérisé en ce que** le support (11 ; 111) présente une ouverture d'enfichage (43) pour l'enfichage de la section de vis (51 ; 251) d'au moins un élément de fixation à vis (50-650).

3. Attelage selon la revendication 1 ou 2, **caractérisé en ce que** l'au moins un élément de fixation à vis (50-650) présente au moins un contour d'entraînement rotatif (52-252 ; 452), en particulier un contour hexagonal, pour un outil de montage, dans lequel l'au moins un contour d'entraînement rotatif (52-252 ; 452) comporte de manière appropriée un contour d'entraînement rotatif (52-252 ; 452) agencé entre la section de vis (51 ; 251) et l'oeillet (53 ; 253 ; 453 ; 653) et/ou un contour d'entraînement rotatif (52-252 ; 452) agencé au niveau d'une extrémité libre éloignée de la section de vis (51 ; 251) de l'oeillet (53 ; 253 ; 453 ; 653) et/ou est agencé sur une périphérie extérieure d'un corps en forme de plaque et/ou d'une partie de pied (54 ; 254-454) et/ou d'une partie de tête (154).

4. Attelage selon l'une quelconque des revendications précédentes, **caractérisé en ce que** l'au moins un élément de fixation à vis (50-650) est en plusieurs parties et un élément de vis (261, 461) présentant la section de vis (51 ; 251) et un élément d'oeillet (260-660) présentant l'oeillet (53 ; 253 ; 453 ; 653) pour l'attelage d'un câble de rupture d'attelage (83), dans lequel sur l'élément d'oeillet (260-660) est présente une ouverture d'enfichage (62) ou une ouverture de vissage (63) pour l'enfichage ou le vissage de la section de vis (51 ; 251) de l'élément de vis (261, 461), dans lequel avantageusement sur l'ouverture de vissage (63) ou l'ouverture d'enfichage (62) est agencé un contour de blocage rotatif (67) pour le maintien sûr en rotation de l'élément de vis (261, 461), en particulier d'une tête de l'élément de vis (261, 461).

5. Attelage selon l'une quelconque des revendications précédentes, **caractérisé en ce que** la section de vis (51 ; 251) comporte un filet extérieur agencé sur une saillie de vis (69) et/ou un filet intérieur agencé sur une ouverture de vissage (63).

6. Attelage selon l'une quelconque des revendications précédentes, **caractérisé en ce que** l'oeillet (53 ; 253 ; 453 ; 653) d'au moins un élément de fixation à vis (50-650) par rapport à un sens d'étendue longitudinale de l'élément de fixation à vis (50-650) a une forme longitudinale, dans lequel une largeur transversale de l'oeillet (53 ; 253 ; 453 ; 653) transversalement au sens d'étendue longitudinale est inférieure à une longueur s'étendant dans le sens d'étendue longitudinale de l'oeillet (53 ; 253 ; 453 ; 653).

7. Attelage selon l'une quelconque des revendications précédentes, **caractérisé en ce que** l'oeillet (53 ; 253 ; 453 ; 653) d'au moins un élément de fixation à vis (50-650) présente un renforcement mécanique, en particulier une nervure pour l'augmentation de la capacité de charge de l'oeillet (53 ; 253 ; 453 ; 653) et/ou **en ce qu'**une bride d'appui (59) est montée entre l'oeillet (53 ; 253 ; 453 ; 653) et la section de vis (51 ; 251).

8. Attelage selon l'une quelconque des revendications précédentes, **caractérisé en ce qu'**un axe (74) traversant perpendiculairement une ouverture de passage de l'oeillet et un axe de vis (73) qui s'étend dans le sens longitudinal de la section de vis (51 ; 251) ou traverse perpendiculairement une ouverture d'enfichage (62) ou une ouverture de vissage (63) pour l'enfichage ou le vissage de la section de vis (51 ; 251) d'un élément de vis (261, 461) de l'élément de fixation à vis (50-650), sont angulaires l'un à l'autre.

9. Attelage selon l'une quelconque des revendications précédentes, **caractérisé en ce que** l'oeillet (53 ; 253 ; 453 ; 653) est agencé dans l'état monté en dehors d'un espace libre fixé en particulier par la norme ECE-R 55 pour un attelage à boule, dans lequel l'espace libre libère un espace de mouvement pour l'attelage à boule.

10. Attelage selon l'une quelconque des revendications précédentes, **caractérisé en ce que** l'élément de fixation à vis (50-650) présente un corps d'appui (73) dépassant en particulier d'une section de bride ou d'un corps de bride pour l'engagement à complémentarité de formes en particulier dans un logement coaxial à un perçage fileté ou une ouverture d'enfichage du support (11 ; 111) ou du composant relié par l'élément de fixation à vis (50-650).

11. Attelage selon l'une quelconque des revendications précédentes, **caractérisé en ce que** la section de vis (51 ; 251) est reliée à une section transversale (56) de l'oeillet (53 ; 253 ; 453 ; 653) ou forme la section transversale (56), dans lequel des branches latérales (57) de l'oeillet (53 ; 253 ; 453 ; 653) dépassent de la section transversale (56), dans lequel les branches latérales (57) et la section de vis (51 ; 251) sont angulaires les unes aux autres ou présentent des sens axiaux parallèles les uns aux autres.

12. Attelage selon l'une quelconque des revendications précédentes, **caractérisé en ce que** l'oeillet (53 ; 253 ; 453 ; 653) est orienté dans l'état monté de l'élément de fixation à vis (50-650) en direction de l'élément d'attelage (19) ou dépasse du support (11 ; 111) en direction de l'élément d'attelage (19) et/ou en ce que le support (11 ; 111) est ou peut être fixé avec au moins un autre boulon fileté au véhicule automobile (90) ou à une traverse (91 ; 191) pour le véhicule automobile.

13. Attelage selon l'une quelconque des revendications précédentes, **caractérisé en ce que** le support d'attelage (18 ; 118) est relié fixement au support (11 ; 111) ou **en ce que** le support d'attelage (18 ; 118) est logé de manière mobile sur le support (11 ; 111) à l'aide d'un agencement de palier (14) entre une position d'utilisation prévue pour l'attelage de la remorque (80) et une position de non-utilisation déplacée plus près du véhicule automobile ou **en ce que** le support d'attelage (18 ; 118) peut être fixé de manière amovible sur le support (11 ; 111).

14. Attelage selon l'une quelconque des revendications précédentes, **caractérisé en ce que** l'au moins un élément de fixation à vis (50-650) est agencé sur le support d'attelage (18 ; 118) ou sur un lieu de fixation du support d'attelage (18; 118) en particulier avec un composant de l'agencement de palier (14).
